# EUROPÄISCHE PATENTSCHRIFT

(11) **EP 0 572 802 B1**
(45) Veröffentlichungstag und Bekanntmachung des Hinweises auf die Patenterteilung: **03.01.1996**
(21) Anmeldenummer: 93106955.3
(22) Anmeldetag: 29.04.1993
(51) Int. Cl.: F16D 65/60

(54) **Nachstellvorrichtung für Fahrzeugbremsen**
Adjusting device for vehicle brakes
Dispositif de rajustage pour freins de véhicules

(30) Priorität: 03.06.1992 DE 4218251
(43) Veröffentlichungstag der Anmeldung: 08.12.1993
(73) Patentinhaber: BPW Bergische Achsen Kommanditgesellschaft, D-51674 Wiehl (DE)
(72) Erfinder: Ebbinghaus, Wilfried, Dipl.-Ing., W-5276 Wiehl (DE); Flick, Joachim, Dipl.-Ing., W-5276 Wiehl (DE); Stader, Rolf, Dipl.-Ing., W-5206 Neunkirchen (DE)
(74) Vertreter: Stenger, Watzke & Ring Patentanwälte

(56) Entgegenhaltungen:
- EP-A- 0 154 799
- EP-A- 0 460 372
- EP-B- 0 319 693
- DE-A- 2 813 841
- DE-A- 4 036 311
- US-A- 3 526 303

## Beschreibung

Gegenstand der Erfindung ist eine selbsttätige Nachstellvorrichtung für Fahrzeugbremsen mit einem als Bremshebel dienenden Gehäuse, in dem ein aus Schnecke und Schneckenrad bestehendes Nachstellgetriebe angeordnet ist, welches über eine Kupplung mit Stirnverzahnungen und ein Treibglied mit einem in das Gehäuse hineinragenden, feststehenden Hebel zusammenarbeitet, wobei eine Stirnverzahnung an der Schneckenwelle und die andere Stirnverzahnung an einem gegen eine Druckfeder verschiebbar auf der Schneckenwelle axial verschiebbar und drehbar gelagerten Kupplungsring angeordnet ist und die Schneckenwelle am kupplungsseitigen Ende entgegen dem Drehsinn der Nachstellung manuell rückdrehbar ist.

Eine selbsttätige Nachstellvorrichtung der vorstehend beschriebenen Konstruktion ist aus der EP-B-0 319 693 bekannt. Zum Justieren dieser bekannten Nachstellvorrichtung ist es erforderlich, die aus dem Gehäuse herausragende Stirnseite der Schneckenwelle freizulegen und die Kupplung zwischen Schneckenwelle und Kupplungsring mit einem speziellen Werkzeug zu lüften.

Davon ausgehend liegt der Erfindung die **Aufgabe** zugrunde, die bekannte Nachstellvorrichtung so weiterzuentwickeln, daß das Justieren und Rückstellen von außen erfolgen kann, ohne dafür das Gehäuse im Bereich der Schneckenwelle öffnen zu müssen.

Als technische **Lösung** wird dafür bei einer ersten Ausführungsform vorgeschlagen, in dem Gehäuse vor der Schneckenwelle einen drehbar gelagerten Mitnehmer anzuordnen, der sich mit einer Stirnseite am Gehäuse abstützt und an der anderen Stirnseite mit der Schneckenwelle verbunden ist, zwischen dem Mitnehmer und dem Kupplungsring eine Ausrückhülse anzuordnen, die axial verschiebbar aber unverdrehbar auf der Schneckenwelle gelagert ist, und zwischen dem Mitnehmer und der Ausrückhülse eine Ausrückvorrichtung anzuordnen, mit der durch Verdrehen des Mitnehmers die Ausrückhülse axial gegen den Kupplungsring verschiebbar ist, um die Kupplung zu öffnen.

Dabei kann der Mitnehmer mit kreisringabschnittförmigen Klauen zwischen kreisringabschnittförmige Klauen der Schneckenwelle eingreifen, wobei zwischen Anschlagflächen der Klauen ein Spiel in der Größe eines notwendigen Ausrückwinkels für die Kupplung besteht. Bei dieser ersten Ausführungsform wird das Drehmoment zum Justieren und Rückstellen nach dem Entkuppeln von außen über den Mitnehmer auf die Schneckenwelle übertragen.

Bei einer zweiten Ausführungsform wird als technische **Lösung** vorgeschlagen, in dem Gehäuse vor der Schneckenwelle einen drehbar gelagerten Mitnehmer anzuordnen, der sich mit einer Stirnseite am Gehäuse abstützt, zwischen dem Mitnehmer und dem Kupplungsring eine Ausrückhülse anzuordnen, die axial verschiebbar aber unverdrehbar auf der Schneckenwelle gelagert ist, zwischen dem Mitnehmer und der Ausrückhülse eine Ausrückvorrichtung anzuordnen, mit der durch Verdrehen des Mitnehmers die Ausrückhülse axial in den Kupplungsring verschiebbar ist, um die Kupplung zu öffnen, und den Mitnehmer und die Ausrückhülse über die Ausrückvorrichtung miteinander zu kuppeln.

Bei dieser zweiten Ausführungsform wird das Drehmoment zum Justieren und Rückstellen nach dem Entkuppeln von außen über den Mitnehmer und die Ausrückhülse auf die Schneckenwelle übertragen.

Aus der EP-A-0 460 372 ist zwar ebenfalls eine Nachstellvorrichtung für Fahrzeugbremsen bekannt gewesen, die jedoch im Gegensatz zur Erfindung kraftschlüssig arbeitet und zu diesem Zweck Schlingfedern verwendet. Hierdurch ergibt sich eine kraftabhängige Nachstellung, die schwierig abzustimmen ist, da sich bei ihr in Abhängigkeit vom Verschleiß und von Schwankungen der Reibungsverhältnisse unterschiedliche Nachstelleffekte ergeben. Diese Nachteile werden mit der erfindungsgemäßen Nachstellvorrichtung mit formschlüssigem Nachstellmechanismus vermieden.

Bei beiden Ausführungsformen der Erfindung besteht die Ausrückvorrichtung zweckmäßig aus wenigstens einer in die mitnehmerseitige Stirnfläche der Ausrückhülse eingelassenen Kerbe mit Schrägfläche und einem am Mantel des Mitnehmers angeordneten Nocken. Durch Verdrehen des Mitnehmers gegen die Nachstellrichtung kann auf diese Weise durch Axialverschiebung des Kupplungsringes mit der Ausrückhülse die Kupplung zwischen der Schneckenwelle und dem Kupplungsring gelöst werden.

Während bei der ersten Ausführungsform das Drehmoment von außen über den Mitnehmer auf die Schneckenwelle übertragen wird, sobald das Ausrückspiel zwischen den Klauen geschlossen ist, erfolgt bei der zweiten Ausführung die Ubertragung des Drehmomentes über die zwischengeschaltete Ausrückhülse, in dem an beiden Enden der Kerbe Anschlagflächen für den Nocken des Mitnehmers vorgesehen werden.

Bei beiden Ausführungsformen hat es sich als zweckmäßig erwiesen, in der Ausrückhülse zwei Kerben und am Mitnehmer zwei Nocken vorzusehen, um eine symmetrische Belastung und Wirkungsweise zu erreichen.

Um den Mitnehmer nach dem Justieren oder Rückstellen wieder in seine Ausgangslage zurück zu bewegen und damit die Kupplung zwischen Schneckenwelle und Kupplungsring zu schließen, sind auf der Stirnfläche der Schneckenwelle bzw. auf der Unterseite des Mitnehmers Zapfen zum Befestigen einer Rückstellfeder vorgesehen, die mit ihren Schenkeln bei der ersten Ausführungsform in Schlitze des Mitnehmers eingreift und bei der zweiten Ausführungsform an Vorsprüngen der Ausrückhülse anliegt.

In beiden Ausführungsvarianten hat eine erfindungsgemäß ausgebildete Nachstellvorrichtung den **Vorteil**, daß das Gehäuse zum Justieren und Rückstellen nicht geöffnet werden muß, weil durch einfaches Verdrehen des Mitnehmers alle dafür notwendigen Funktionen durchgeführt werden können. Zu diesem Zweck kann der Mitnehmer sich an einem in das Gehäuse eingeschraubten Deckel abstützen, der eine kleine Offnung hat. Unter dieser Offnung im Deckel hat der Mitnehmer entweder eine Inbusvertiefung zum Einstecken eines Schlüssels oder aber er ragt aus der Offnung mit einem profilierten Kopfstück heraus, auf das ein Schlüssel gesteckt werden kann. Einfacher ist das Justieren und Rückdrehen einer Nachstellvorrichtung der hier vorliegenden Gattung kaum noch vorstellbar.

Weitere Einzelheiten und Vorteile ergeben sich aus der nachfolgenden Beschreibung der zugehörigen Zeichnungen, in der die beiden Ausführungsformen einer erfindungsgemäß ausgebildeten Nachstellvorrichtung in Ansichten und Schnitten dargestellt worden sind. In den Zeichnungen zeigen:

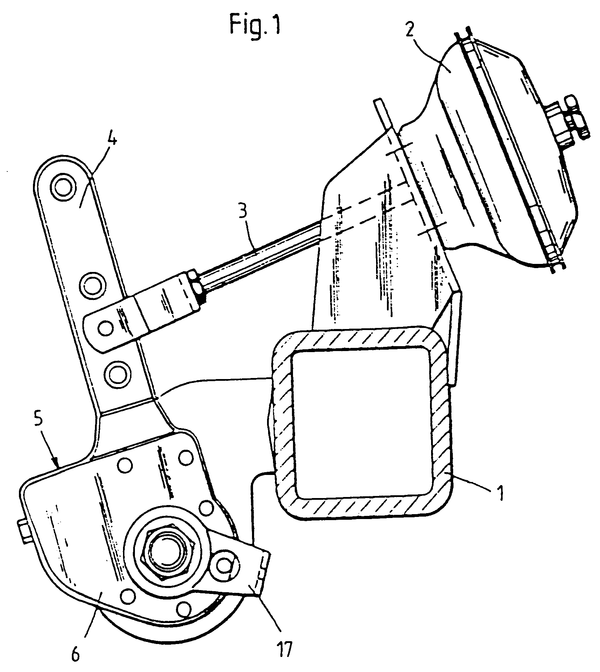

- Fig. 1: Ein Bremsgestänge mit einer Nachstellvorrichtung in Seitenansicht;
- Fig. 2: eine Nachstellvorrichtung mit teilweise entferntem Deckel zur Veranschaulichung des Nachstellmechanismus in Ausgangslage und in Seitenansicht;
- Fig. 3: dieselbe Nachstellvorrichtung zur Veranschaulichung des Nachstellmechanismus in Endlage und in Seitenansicht;

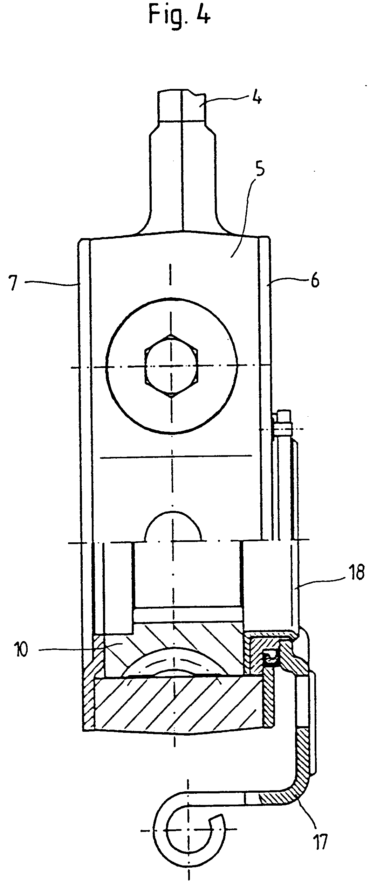

- Fig. 4: dieselbe Nachstellvorrichtung entlang der Linie IV-IV in Fig. 2 geschnitten in Stirnansicht;
- Fig. 5: dieselbe Nachstellvorrichtung zur weiteren Veranschaulichung des Nachstellmechanismus in Ausgangslage und entlang der Linie V-V in Fig. 2 geschnitten;
- Fig. 6: dieselbe Nachstellvorrichtung zur Veranschaulichung der Endlage des Nachstellmechanismus entlang der Linie VI-VI in Fig. 2 geschnitten;
- Fig. 7: dieselbe Nachstellvorrichtung entlang der Linie VII-VII in Fig. 6 geschnitten in Seitenansicht;
- Fig. 8: einen Ausschnitt aus Fig. 7 mit ausgerückter Kupplung in Seitenansicht;
- Fig. 9: denselben Ausschnitt entlang der Linie IX-IX in Fig. 8 geschnitten;
- Fig. 10: denselben Ausschnitt mit eingerückter Kupplung in Seitenansicht;
- Fig. 11: denselben Ausschnitt entlang der Linie XI-XI in Fig. 10 geschnitten;
- Fig. 12: eine Schneckenwelle in Seitenansicht;
- Fig. 13: dieselbe Schneckenwelle in Stirnansicht;
- Fig. 14: einen vergrößerten Ausschnitt der Schneckenwelle in Seitenansicht;
- Fig. 15: einen vergrößerten Ausschnitt der Schneckenwelle entlang der Linie XV-XV in Fig. 13 geschnitten in Seitenansicht;
- Fig. 16: einen Mitnehmer in Seitenansicht;
- Fig. 17: denselben Mitnehmer in Ansicht von der Unterseite;
- Fig. 18: eine Ausrückhülse in Seitenansicht;
- Fig. 19: dieselbe Ausrückhülse in Draufsicht;
- Fig. 20: einen Kupplungsring in Seitenansicht;
- Fig. 21: denselben Kupplungsring in Draufsicht;
- Fig. 22: eine zweite Ausführungsform der Nachstellvorrichtung entlang der Linie XXII-XXII in Fig. 6 geschnitten;
- Fig. 23: einen Ausschnitt der Ausstellvorrichtung mit ausgerückter Kupplung in Seitenansicht;
- Fig. 24: denselben Ausschnitt entlang der Linie XXIV-XXIV in Fig. 23 geschnitten;
- Fig. 25: einen Ausschnitt der Nachstellvorrichtung mit eingerückter Kupplung in Seitenansicht;
- Fig. 26: denselben Ausschnitt entlang der Linie XXVI-XXVI in Fig. 25 geschnitten;
- Fig. 27: eine Schneckenwelle in Seitenansicht;
- Fig. 28: dieselbe Schneckenwelle in Draufsicht;
- Fig. 29: einen vergrößerten Ausschnitt der Schneckenwelle in Seitenansicht;
- Fig. 30: denselben vergrößerten Ausschnitt entlang der Linie XXX in Fig. 28 geschnitten;
- Fig. 31: einen Mitnehmer teilweise geschnitten teilweise in Seitenansicht;
- Fig. 32: denselben Mitnehmer in Ansicht von der Unterseite;
- Fig. 33: eine Ausrückhülse in Seitenansicht;
- Fig. 34: dieselbe Ausrückhülse in Draufsicht;
- Fig. 35: einen Kupplungsring in Seitenansicht;
- Fig. 36: denselben Kupplungsring in Draufsicht.

Ein Bremsgestänge besteht aus einem an einem Achskörper 1 befestigten Membranzylinder 2 mit einer Kolbenstange 3, die an einem Bremshebel 4 angreift, der auf einer - nicht dargestellten - Bremswelle befestigt ist. Durch die Bewegung der Kolbenstange 3 können die Bremsnocken in einer Trommelbremse gedreht und damit die Bremsbacken bzw. die Bremsbeläge zur Anlage an einer Bremstrommel gebracht werden.

Mit dem Bremshebel 4 ist ein Gehäuse 5 mit Deckeln 6,7 verbunden, in welchen eine Nachstellvorrichtung zum Ausgleich des Bremsbelagverschleißes angeordnet ist. Die Nachstellvorrichtung besteht aus einer auf einer Schneckenwelle 8 angeordneten Schnecke 9 und einem auf der - nicht dargestellten - Bremswelle mit einer Innenverzahnung befestigten Schneckenrad 10.

Neben der Schnecke 9 ist auf einer Seite in dem Gehäuse 5 eine Kupplung angeordnet, welche aus einem auf der Schneckenwelle 8 gelagerten Kupplungsring 12 mit einer Stirnverzahnung 13 und einer auf der Unterseite eines Schneckenwellenkopfes 14 angeordneten Stirnverzahnung 15 besteht. Die beiden Stirnverzahnungen 13,15 werden mit einer auf der Schneckenwelle 8 angeordneten Druckfeder 16 in Eingriff gehalten.

Auf einer Seite des Gehäuses 5 ist ein Hebel 17 angeordnet, der mit einer Hülse 18 unter dem Deckel 6 hindurch in das Gehäuse 5 hineingeführt ist und am anderen Ende einen Ring 19 mit einem Anschlagnocken 20 hat, welcher in einer Aussparung 21 des Gehäuses 5 eingreift. Der Anschlagnocken 20 und die Aussparung 21 begrenzen den maximalen Hub des Bremshebels 4 im Verhältnis zu dem Hebel 17, der mit einem feststehenden Teil des Fahrzeuges, beispielsweise dem Achskörper 1 verbunden ist.

Zwischen der Hülse 18 des Hebels 17 und dem Kupplungsring 12 ist eine flaches Treibglied 22 angeordnet, welches einerseits mit einem runden Kopf 23 in die Hülse 18 und andererseits mit einem Haken 24 in eine Ausnehmung 25 des Kupplungsringes 12 eingreift.

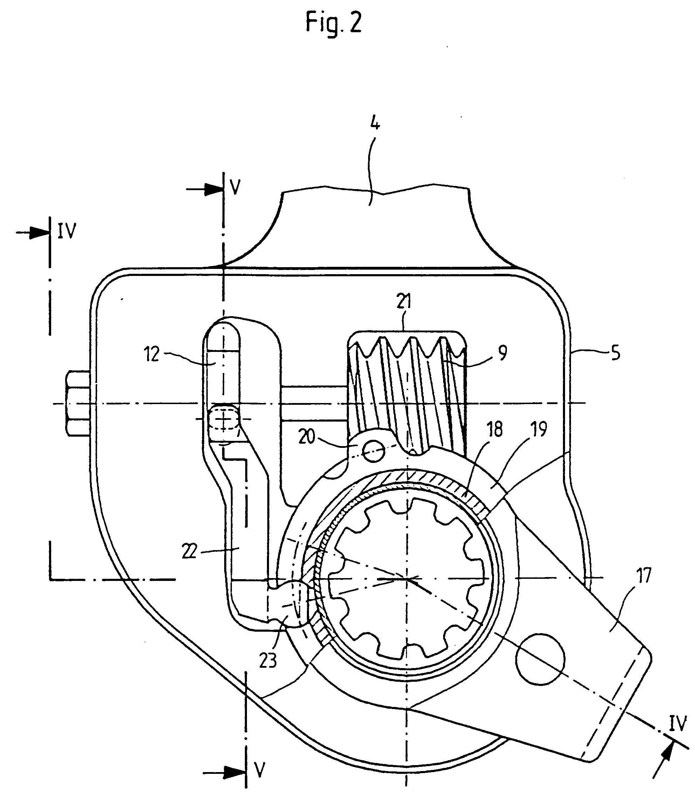

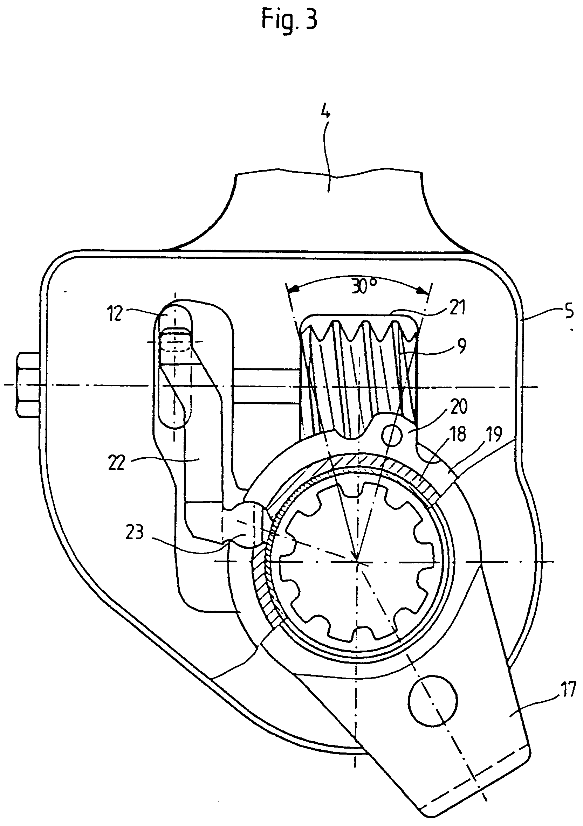

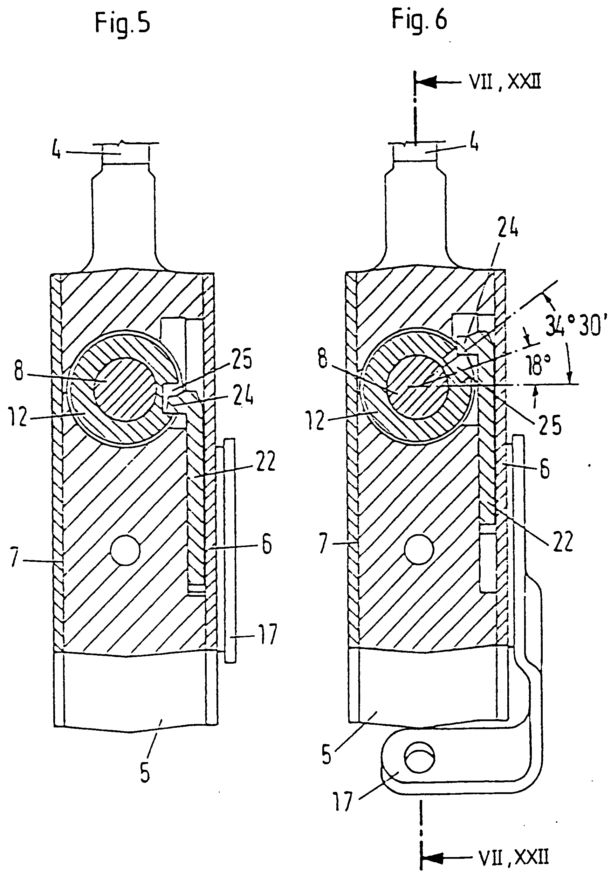

Beim Betätigen des Bremsgestänges wird der Hebel 4 relativ zum feststehenden Hebel 17 verdreht, wie es sich aus den Gegenüberstellungen der Fig. 2 und 3 bzw. 5 und 6 ergibt. Die maximale Verschwenkbewegung wird durch die Größe der Aussparung 21 im Gehäuse bzw. des in diese eingreifenden Anschlagnockens 20 begrenzt und beträgt im dargestellten Ausführungsbeispiel 30°. Bei der Schwenkbewegung wird der Kupplungsring 12 mit dem Treibglied 22 relativ zur Schneckenwelle 8 gedreht. Solange der Bremshub unterhalb der Teilung der Stirnverzahnungen 13,15 der Kupplung bleibt, erfolgt keine Nachstellung. Sobald der Bremshub aber in Folge des Bremsbelagverschleißes größer wird als die Teilung der beiden Stirnverzahnungen 13,15 greifen die Zähne über, so daß beim Rückhub eine Nachstellung erfolgt.

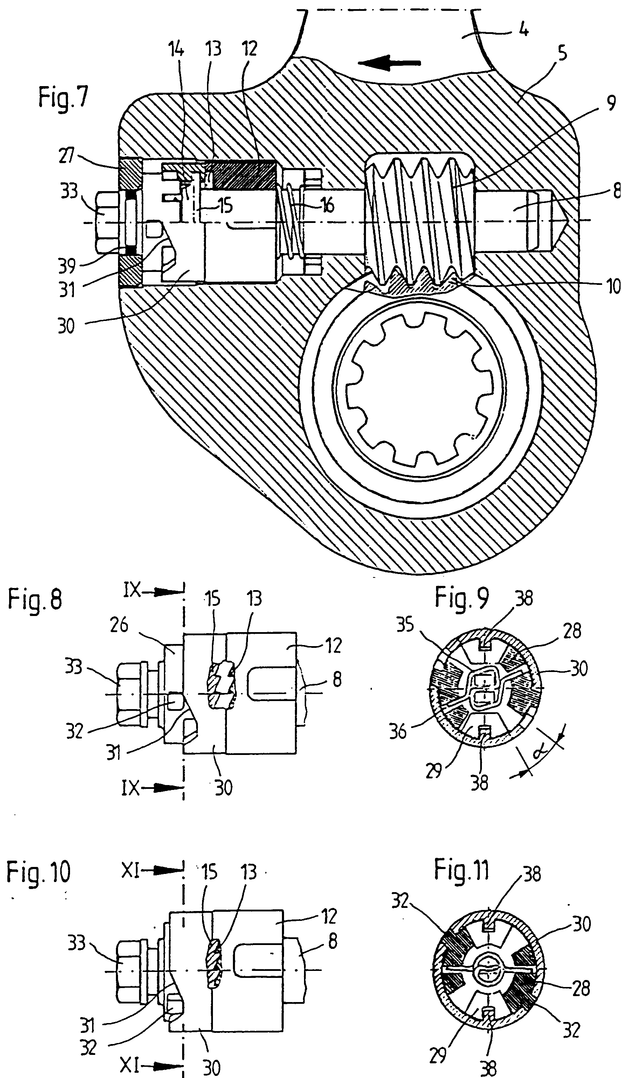

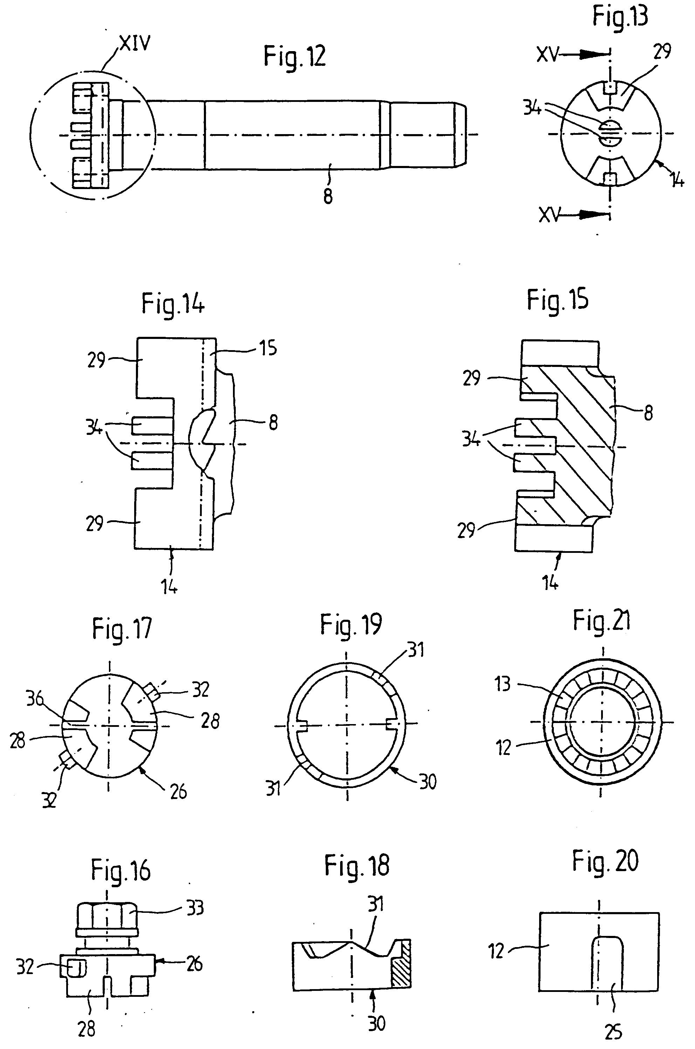

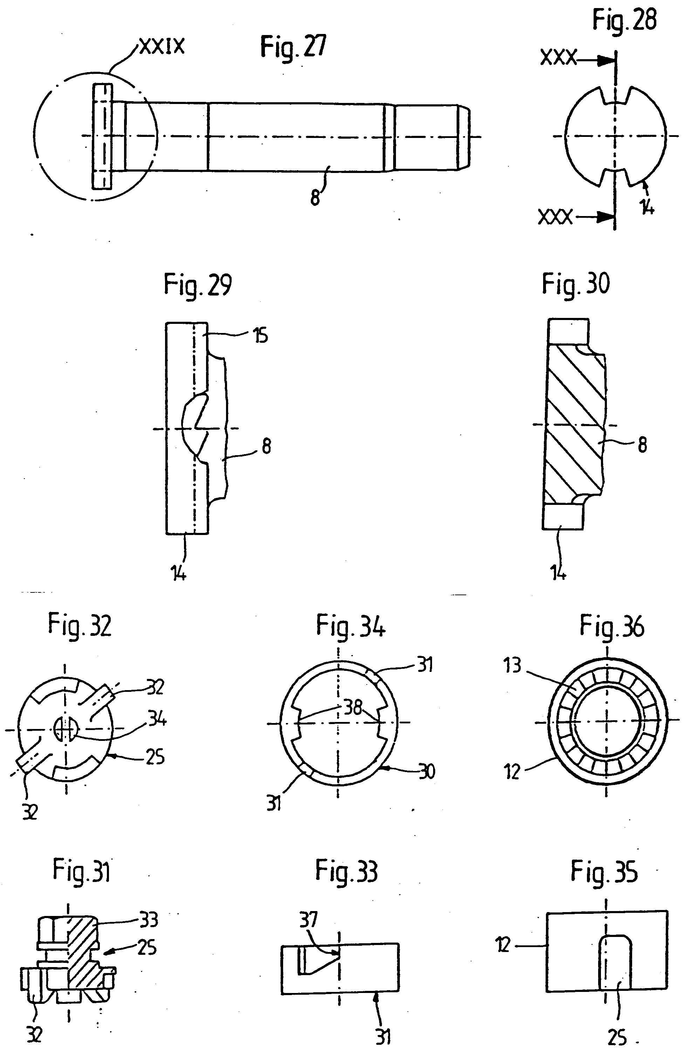

Zum Justieren der Nachstellvorrichtung nach einem Belagwechsel muß die Schneckenwelle 8 entgegen dem Drehsinn der Nachstellrichtung von Hand zurückgedreht werden. Dafür muß die Kupplung zwischen den beiden Stirnverzahnungen 13,15 geöffnet werden. In den Fig. 7 bis 21 und 22 bis 36 sind zwei verschiedene Ausführungsformen von Einrichtungen zum Entkuppeln und Justieren dargestellt worden.

Bei der Ausführungsform gemäß Fig. 7 bis 21 ist vor dem Schneckenwellenkopf 14 ein Mitnehmer 26 angeordnet, der sich einerseits unter einem ringförmigen Deckel 27 abstützt, der in das Gehäuse 5 eingeschraubt ist, und andererseits mit kreisringabschnittförmigen Klauen 28 zwischen kreisringabschnittförmige Klauen 29 auf dem Schneckenwellenkopf 14 eingreift. An dem Schneckenwellenkopf 14 ist eine Ausrückhülse 30 axial verschiebbar gelagert, die sich einerseits am Mitnehmer 26 und andererseits auf dem Kupplungsring 12 abstützt.

In der mitnehmerseitigen Stirnfläche der Ausrückhülse 30 sind zwei Kerben mit je einer Schrägfläche 31 vorgesehen, denen Nocken 32 des Mitnehmers 26 anliegen.

Bei eingerückter Kupplung (Fig. 10) liegen die beiden Nocken 32 im Tal der Kerben mit den Schrägflächen 31. Wenn der Mitnehmer 26 an einem aus dem Deckel 27 herausragenden Kopf 33 gegen die Nachstellrichtung verdreht wird, drücken die beiden Nocken 32 die Ausrückhülse 30 gegen die Wirkung der Druckfeder 16 nach innen und lüften damit die Kupplung, weil sich der Kupplungsring 12 ebenfalls nach innen bewegt. Mit Hilfe dieser Ausrückvorrichtung kann die Schneckenwelle 8 am Kopf 33 des Mitnehmers 26 in die Ausgangslage zurückgedreht werden. Dabei wird das Drehmoment vom Mitnehmer 26 über die Klauen 28,29 auf die Schneckenwelle übertragen.

Um eine Rückkehr des Mitnehmers 26 in seine Ausgangslage in Bezug auf die Ausrückhülse 30 und damit das Einkuppeln der Kupplung zu gewährleisten, ist an Zapfen 34 des Schneckenwellenkopfes 14 eine Rückstellfeder 35 befestigt, die mit ihren Schenkeln in Schlitze 36 des Mitnehmers 26 eingreift. Zwischen den Klauen 28 des Mitnehmers 26 und den Klauen 29 der Schneckenwelle 8 ist ein Spiel vorhanden, welches ausreicht, um die Kupplung zu lösen, bevor das Zurückdrehen der Schneckenwelle 8 beginnt.

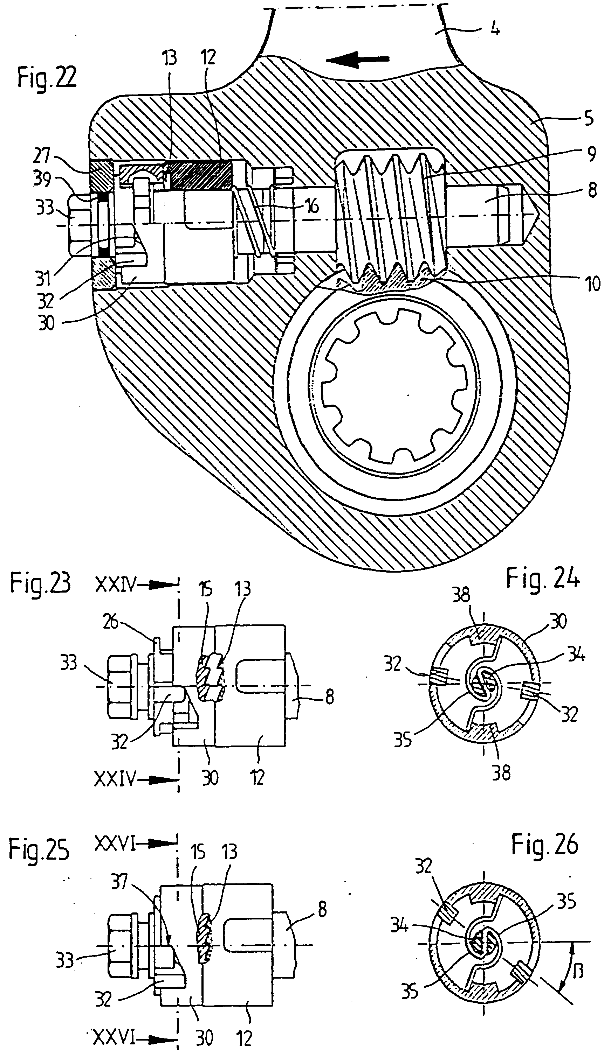

Die Ausführungsform der Nachstellvorichtung nach den Fig. 22 bis 36 unterscheidet sich von der vorstehend beschriebenen Ausführungsform im wesentlichen dadurch, daß das Drehmoment beim Rückstellen nicht direkt vom Mitnehmer 26 auf die Schneckenwelle 8 übertragen wird, sondern indirekt über die Ausrückhülse 30. Zu diesem Zweck haben die Schrägflächen 31 am Ende ihrer Steigung einen Anschlag 37, an dem die Nocken 32 des Mitnehmers 26 hängen bleiben und die Ausrückhülse 30 mitnehmen. Bei dieser Ausführungsform fehlen die Klauen 28,29 am Schneckenwellenkopf 14 und unter dem Mitnehmer 26. Da die Ausrückhülse 30 bei beiden Ausführungsformen mit Keilen 38 in entsprechenden Nuten am Schneckenwellenkopf 14 axial verschiebbar geführt ist, wird das Drehmoment nach dem Lüften der Kupplung mittelbar über die Ausrückhülse auf die Schneckenwelle 8 übertragen. Im übrigen stimmen die Funktionen beider Ausführungsformen überein.

Bei dieser zweiten Ausführungsform liegt die an den Zapfen 34 des Mitnehmers 26 befestigte Rückstellfeder 35 den Keilen 38 der Ausrückhülse 30 an.

Bei beiden Ausführungsformen ist zwischen dem ringförmigen Deckel 27 und dem Mitnehmer 26 eine Dichtung 39 angeordnet, um das Eindringen von Staub in das Innere der Nachstellvorrichtung zu vermeiden.

### Bezugszeichenliste

- 1: Achskörper
- 2: Membranzylinder
- 3: Kolbenstange
- 4: Bremshebel
- 5: Gehäuse
- 6: Deckel
- 7: Deckel
- 8: Schneckenwelle
- 9: Schnecke
- 10: Schneckenrad
- 12: Kupplungsring
- 13: Stirnverzahnung
- 14: Schneckenwellenkopf
- 15: Stirnverzahnung
- 16: Druckfeder
- 17: Hebel
- 18: Hülse
- 19: Ring
- 20: Anschlagnocken
- 21: Aussparung
- 22: Treibglied
- 23: Kopf
- 24: Haken
- 25: Ausnehmung
- 26: Mitnehmer
- 27: Deckel
- 28: Klaue
- 29: Klaue
- 30: Ausrückhülse
- 31: Schrägfläche
- 32: Nocken
- 33: Kopf
- 34: Zapfen
- 35: Rückstellfeder
- 36: Schlitz
- 37: Anschlag
- 38: Keil
- 39: Dichtung

## Patentansprüche

1. Selbsttätige Nachstellvorrichtung für Fahrzeugbremsen mit einem als Bremshebel (4) dienenden Gehäuse (5), in dem ein aus Schnecke (9) und Schneckenrad (10) bestehendes Nachstellgetriebe angeordnet ist,
welches über eine Kupplung mit Stirnverzahnungen (13,15) und ein Treibglied (22) mit einem in das Gehäuse (5) hineinragenden, feststehenden Hebel (17) zusammenarbeitet,
wobei eine Stirnverzahnung (15) an der Schneckenwelle (8) und die andere Stirnverzahnung (13) an einem gegen eine Druckfeder (16) verschiebbar auf der Schneckenwelle (8) axial verschiebbar und drehbar gelagerten Kupplungsring (12) angeordnet ist und
die Schneckenwelle (8) am kupplungsseitigen Ende entgegen dem Drehsinn der Nachstellung manuell rückdrehbar ist,
**dadurch gekennzeichnet,**
daß in dem Gehäuse (5) vor der Schneckenwelle (8) ein drehbar gelagerter Mitnehmer (26) angeordnet ist, der sich mit einer Stirnseite am Gehäuse (5) abstützt und an der anderen Stirnseite mit der Schneckenwelle (8) verbunden ist,
daß zwischen dem Mitnehmer (26) und dem Kupplungsring (12) eine Ausrückhülse (30) angeordnet ist, die axial verschiebbar aber unverdrehbar auf der Schneckenwelle (8) gelagert ist und daß zwischen dem Mitnehmer (26) und der Ausrückhülse eine Ausrückvorrichtung angeordnet ist, mit der durch Verdrehen des Mitnehmers (26) die Ausrückhülse (30) axial gegen den Kupplungsring (12) verschiebbar ist, um die Kupplung zu öffnen.

2. Nachstellvorrichtung nach Anspruch 1, dadurch gekennzeichnet, daß der Mitnehmer (26) mit kreisringabschnittförmigen Klauen (28) zwischen kreisringabschnittförmigen Klauen (29) der Schneckenwelle (8) eingreift, wobei zwischen den Anschlagflächen der Klauen (28,29) ein Spiel in der Größe eines Ausrückwinkels ℓ besteht.

3. Nachstellvorrichtung nach Anspruch 1, dadurch gekennzeichnet, daß am Kopf der Schneckenwelle (8) Zapfen für die Befestigung einer Rückstellfeder (35) angeordnet sind, die mit ihren Schenkeln in Schlitze (36) des Mitnehmers (26) greift.

4. Selbsttätige Nachstellvorrichtung für Fahrzeugbremsen mit einem als Bremshebel (4) dienenden Gehäuse (5), in dem ein aus Schnecken (9) und Schneckenrad (10) bestehendes Nachstellgetriebe angeordnet ist,
welches über eine Kupplung mit Stirnverzahnungen (13,15) und ein Treibglied (22) mit einem in das Gehäuse (5) hineinragenden, feststehenden Hebel (17) zusammenarbeitet,
wobei eine Stirnverzahnung (15) an der Schneckenwelle (8) und die andere Stirnverzahnung (13) an einem auf der Schneckenwelle (8) gegen eine Druckfeder (16) axial verschiebbar und drehbar gelagerten Kupplungsring (12) angeordnet ist und
die Schneckenwelle (8) am kupplungsseitigen Ende entgegen dem Drehsinn der Nachstellung manuell rückdrehbar ist,
**dadurch gekennzeichnet,**
daß in dem Gehäuse (5) vor der Schneckenwelle (8) ein drehbar gelagerter Mitnehmer (26) angeordnet ist, der sich mit einer Stirnseite am Gehäuse (5) abstützt,
daß zwischen dem Mitnehmer (26) und dem Kupplungsring (12) eine Ausrückhülse (30) angeordnet ist, die axial verschiebbar aber unverdrehbar auf der Schneckenwelle (8) gelagert ist,
daß zwischen dem Mitnehmer (26) und der Ausrückhülse eine Ausrückvorrichtung angeordnet ist, mit der durch Verdrehen des Mitnehmers (26) die Ausrückhülse (30) axial gegen den Kupplungsring (12) verschiebbar ist, um die Kupplung zu öffnen und
daß der Mitnehmer (26) und die Ausrückhülse (30) über die Ausrückvorrichtung miteinander gekuppelt sind.

5. Nachstellvorrichtung nach den Ansprüchen 1 und 4, dadurch gekennzeichnet, daß die Ausrückvorrichtung aus wenigstens einer in die mitnehmerseitige Stirnfläche der Ausrückhülse (30) eingelassenen Kerbe mit einer Schrägfläche (31) und wenigstens einem am Mantel des Mitnehmers (26) angeordneten Nocken (32) besteht.

6. Nachstellvorrichtung nach Anspruch 5, dadurch gekennzeichnet, daß zwei Kerben mit je einer Schrägfläche (31) und zwei Nocken (32) vorgesehen sind.

7. Nachstellvorrichtung nach Anspruch 6, dadurch gekennzeichnet, daß die Kerben am Ende ihrer Schrägflächen (31) mit Anschlägen (37) für die Nocken (32) versehen sind.

8. Nachstellvorrichtung nach Anspruch 4, dadurch gekennzeichnet, daß unter dem Mitnehmer (26) Zapfen (34) für die Befestigung einer Rückstellfeder (35) angeordnet sind, die mit ihren Schenkeln an Keilen (38) der Ausrückhülse (30) anliegt.

9. Nachstellvorrichtung nach den Ansprüchen 1 und 4, dadurch gekennzeichnet, daß der Mitnehmer (26) sich an einem in das Gehäuse (5) eingeschraubten Deckel (27) abstützt.

10. Nachstellvorrichtung nach Anspruch 9, dadurch gekennzeichnet, daß der Mitnehmer (26) mit einem profilierten Kopf (33) aus einer Offnung des Deckels (27) herausragt.

11. Nachstellvorrichtung nach Anspruch 9, dadurch gekennzeichnet, daß zwischen dem Mitnehmer (26) und dem Deckel (27) eine Dichtung (39) angeordnet ist.

## Claims

1. Automatic readjustment device for vehicle brakes, comprising a casing (5) which serves as a brake lever (4) and in which is arranged a readjustment gear unit consisting of a worm (9) and a worm wheel (10) and cooperating, via a coupling having face serrations (13, 15) and a driving element (22), with a stationary lever (17) projecting into the casing (5), one face serration (15) being arranged on the worm shaft (8) and the other face serration being arranged on a coupling ring (12) mounted on the worm shaft (8) for axial translation against a compression spring (16) and for rotation, and the worm shaft (8) being able to be turned back manually, oppositely to the direction of rotation for the readjustment, at its coupling end, characterized in that in the casing (5) there is arranged, in front of the worm shaft (8), a rotatably mounted driver (26) which is supported by its one end face against the casing (5) and at its other end face is connected to the worm shaft (8), in that between the driver (26) and the coupling ring (12) a disengagement sleeve (30) is arranged which is mounted on the worm shaft (8) for axial translation while being non-rotatable thereon, and in that between the driver (26) and the disengagement sleeve a disengagement device is arranged by which through the turning of the driver (26) the disengagement sleeve (30) can be moved axially towards the coupling ring (12) in order to open the coupling.

2. Readjustment device according to claim 1, characterized in that by means of claws (28) in the form of annular circular segments the driver (26) engages between claws (29) in the form of annular circular segments of the worm shaft (8), a clearance of the order of a disengagement angle α existing between the stop surfaces of the claws (28, 29).

3. Readjustment device according to claim 1, characterized in that pins are arranged on the head of the worm shaft (8) for the purpose of fastening a return spring (35) which engages by its legs in slots (36) in the driver (26).

4. Automatic readjustment device for vehicle brakes, comprising a casing (5) which serves as a brake lever (4) and in which is arranged a readjustment gear unit consisting of a worm (9) and a worm wheel (10) and cooperating, via a coupling having face serrations (13, 15) and a driving element (22), with a stationary lever (17) projecting into the casing (5), one face serration (15) being arranged on the worm shaft (8) and the other face serration being arranged on a coupling ring (12) mounted on the worm shaft (8) for axial translation against a compression spring (16) and for rotation, and the worm shaft (8) being able to be turned back manually, oppositely to the direction of rotation for the readjustment, at its coupling end, characterized in that in the casing (5) there is arranged, in front of the worm shaft (8), a rotatably mounted driver (26) which is supported by its one end face against the casing (5), in that between the driver (26) and the coupling ring (12) a disengagement sleeve (30) is arranged which is mounted on the worm shaft (8) for axial translation while being non-rotatable thereon, in that between the driver (26) and the disengagement sleeve a disengagement device is arranged by which through the turning of the driver (26) the disengagement sleeve (30) can be moved axially towards the coupling ring (12) in order to open the coupling, and in that the driver (26) and the disengagement sleeve (30) are coupled to one another by means of the disengagement device.

5. Readjustment device according to claims 1 and 4, characterized in that the disengagement device consists of at least one notch which is formed in the end face of the disengagement sleeve (30) at the driver end and which has an inclined surface (31), and of at least one cam (32) formed on the peripheral surface of the driver (26).

6. Readjustment device according to claim 5, characterized in that two notches, each having an inclined surface (31), and two cams (32) are provided.

7. Readjustment device according to claim 6, characterized in that at the end of their inclined surfaces (31) the notches are provided with stops (37) for the cams (32).

8. Readjustment device according to claim 4, characterized in that under the driver (26) pins (34) are arranged for the fastening of a return spring (35), which lies with its legs against wedges (38) on the disengagement sleeve (30).

9. Readjustment device according to claims 1 and 4, characterized in that the driver (26) is supported against a cover (27) screwed into the casing (5).

10. Readjustment device according to claim 9, characterized in that a profiled head (33) of the driver (26) projects out of an opening in the cover (27).

11. Readjustment device according to claim 9, characterized in that a seal (39) is arranged between the driver (26) and the cover (27).

## Revendications

1. Dispositif de réajustage automatique pour freins de véhicules, comprenant un boîtier (5) qui sert de levier de frein (4) et dans lequel se trouve un mécanisme de réajustage qui est constitué d'une vis sans fin (9) et d'une roue tangente (10) et qui, par l'intermédiaire d'un dispositif d'accouplement à dentures droites (13, 15) et d'un organe d'actionnement (22), coopère avec un levier fixe (17) qui pénètre dans le boîtier (5), l'une des dentures droites (15) se trouvant sur l'arbre à vis sans fin (8) et l'autre denture droite (13) se trouvant sur un anneau d'accouplement (12) qui peut coulisser à l'encontre d'un ressort de pression (16) et qui est monté avec une possibilité de translation axiale et de rotation sur l'arbre à vis sans fin (8), et l'arbre à vis sans fin (8) pouvant, à l'extrémité située côté dispositif d'accouplement, être tourné manuellement en sens inverse à l'encontre du sens de rotation du réajustage, caractérisé en ce que, dans le boîtier (5), devant l'arbre à vis sans fin (8), est disposé un dispositif d'entraînement monté en rotation (26) dont une des faces frontales prend appui contre le boîtier (5) et dont l'autre face frontale est reliée à l'arbre à vis sans fin (8), en ce que, entre le dispositif d'entraînement (26) et l'anneau d'accouplement (12), est disposée une douille de désaccouplement (30) qui est montée sur l'arbre à vis sans fin (8) avec une possibilité de translation axiale, mais sans possibilité de translation, et en ce que, entre le dispositif d'entraînement (26) et la douille de désaccouplement, est disposé un dispositif de désaccouplement permettant de faire coulisser la douille de désaccouplement (30) axialement contre l'anneau d'accouplement (12) en faisant tourner le dispositif d'entraînement (26), afin d'ouvrir le dispositif d'accouplement.

2. Dispositif de réajustage selon la revendication 1, caractérisé en ce que, au moyen de griffes (28) en forme de segments annulaires, le dispositif d'entraînement (26) s'insère entre des griffes (29) en forme de segments annulaires de l'arbre à vis sans fin (8), un jeu égal à un angle de désaccouplement subsistant entre les surfaces d'appui des griffes (28, 29).

3. Dispositif de réajustage selon la revendication 1, caractérisé en ce que, sur la tête de l'arbre à vis sans fin (8), sont disposés des tenons qui sont destinés à la fixation d'un ressort de rappel (35) dont les branches s'engagent dans des fentes (36) du dispositif d'entraînement (26).

4. Dispositif de réajustage automatique pour freins de véhicules, comprenant un boîtier (5) qui sert de levier de frein (4) et dans lequel se trouve un mécanisme de réajustage qui est constitué d'une vis sans fin (9) et d'une roue tangente (10) et qui, par l'intermédiaire d'un dispositif d'accouplement à dentures droites (13, 15) et d'un organe d'actionnement (22), coopère avec un levier fixe (17) qui pénètre dans le boîtier (5), l'une des dentures droites (15) se trouvant sur l'arbre à vis sans fin (8) et l'autre denture droite (13) se trouvant sur un anneau d'accouplement (12) qui peut coulisser à l'encontre d'un ressort de pression (16) et qui est monté avec une possibilité de translation axiale et de rotation sur l'arbre à vis sans fin (8), et l'arbre à vis sans fin (8) pouvant, à l'extrémité située côté dispositif d'accouplement, être tourné manuellement en sens inverse à l'encontre du sens de rotation du réajustage, caractérisé en ce que, dans le boîtier (5), devant l'arbre à vis sans fin (8), est disposé un dispositif d'entraînement monté en rotation (26) dont une des faces frontales prend appui contre le boîtier (5), en ce que, entre le dispositif d'entraînement (26) et l'anneau d'accouplement (12), est disposée une douille de désaccouplement (30) qui est montée sur l'arbre à vis sans fin (8) avec une possibilité de translation axiale, mais sans possibilité de translation, en ce que, entre le dispositif d'entraînement (26) et la douille de désaccouplement, est disposé un dispositif de désaccouplement permettant de faire coulisser la douille de désaccouplement (30) axialement contre l'anneau d'accouplement (12) en faisant tourner le dispositif d'entraînement (26), afin d'ouvrir le dispositif d'accouplement, et en ce que le dispositif d'entraînement (26) et la douille de désaccouplement (30) sont accouplés l'un à l'autre par l'intermédiaire du dispositif de désaccouplement.

5. Dispositif de réajustage selon les revendications 1 et 4, caractérisé en ce que le dispositif de désaccouplement se compose d'au moins une encoche, qui est pratiquée dans la face frontale de la douille de désaccouplement (30) située côté dispositif d'entraînement et qui présente une surface inclinée (31), et d'au moins un ergot (32) disposé sur la surface périphérique du dispositif d'entraînement (26).

6. Dispositif de réajustage selon la revendication 5, caractérisé en ce qu'il est prévu deux encoches, avec chacune une surface inclinée (31), et deux ergots (32).

7. Dispositif de réajustage selon la revendication 6, caractérisé en ce qu'à l'extrémité de leur surface inclinée (31), les encoches comportent des butées (37) pour les ergots (32).

8. Dispositif de réajustage selon la revendication 4, caractérisé en ce que, sous le dispositif d'entraînement (26), sont disposés des tenons (34) destinés à la fixation d'un ressort de rappel (35) dont les branches sont appliquées contre des cales (38) de la douille de désaccouplement (30).

9. Dispositif de réajustage selon les revendications 1 et 4, caractérisé en ce que le dispositif d'entraînement (26) prend appui sur un couvercle (27) vissé dans le boîtier (5).

10. Dispositif de réajustage selon la revendication 9, caractérisé en ce qu'une tête profilée (33) du dispositif d'entraînement (26) sort par une ouverture du couvercle (27).

11. Dispositif de réajustage selon la revendication 9, caractérisé en ce qu'un joint d'étanchéité (39) est disposé entre le dispositif d'entraînement (26) et le couvercle (27).
